# EUROPÄISCHE PATENTSCHRIFT

(11) **EP 3 730 281 B1**
(45) Veröffentlichungstag und Bekanntmachung des Hinweises auf die Patenterteilung: **28.01.2026**
(21) Anmeldenummer: 20163885.5
(22) Anmeldetag: 18.03.2020
(51) Int. Cl.: B29C 73/06, B29C 73/26

(54) **BEARBEITUNGSVERFAHREN, APPLIKATIONSWERKZEUG UND BEARBEITUNGSANORDNUNG ZUM ÄNDERN ODER REPARIEREN EINER OBERFLÄCHENSTELLE EINER WERKSTÜCKOBER-FLÄCHE EINES FASERVERBUNDWERKSTÜCKS**
PROCESSING METHOD, APPLICATION TOOL AND PROCESSING ASSEMBLY FOR CHANGING OR REPAIRING A SURFACE LOCATION OF A WORKPIECE SUPPORT SURFACE OF A COMPOSITE FIBRE WORKPIECE
PROCÉDÉ D'USINAGE, OUTIL D'APPLICATION ET AGENCEMENT D'USINAGE DESTINÉS À CHANGER OU À RÉPARER UN EMPLACEMENT DE SURFACE D'UNE SURFACE DE PIÈCE D'UNE PIÈCE COMPOSITE FIBREUSE

(30) Priorität: 20.03.2019 DE 102019107202
(43) Veröffentlichungstag der Anmeldung: 28.10.2020
(73) Patentinhaber: Airbus Operations GmbH, 21129 Hamburg (DE)
(72) Erfinder: Zastrow, Alexander, 21129 Hamburg (DE); Kleinpeter, Roman, 21129 Hamburg (DE)
(74) Vertreter: KASTEL Patentanwälte PartG mbB

(56) Entgegenhaltungen:
- DE-A1- 102015 101 328
- DE-A1- 4 019 744
- US-A- 5 928 448
- US-A1- 2007 177 330
- US-A1- 2009 208 691
- US-A1- 2019 061 280

## Beschreibung

Die Erfindung betrifft ein Bearbeitungsverfahren zum Ändern oder Reparieren einer Oberflächenstelle einer Werkstückoberfläche eines Faserverbundwerkstücks. Ferner betrifft die Erfindung ein Applikationswerkzeug und eine Bearbeitungsanordnung, die jeweils in dem Bearbeitungsverfahren verwendet werden.

Während des Zusammenbauens von monolithischen Faserverbundbauteilen sind insbesondere zu tief gesenkte Löcher/Öffnungen ein häufig auftretendes Phänomen. Derzeit verwendete Reparaturmethoden haben eine lange Durchlaufzeit, können ingenieursmäßige Entscheidungen erfordern und somit in Kompromissen resultieren, die mit hohen Kosten verbunden sein können.

Gewöhnlich werden die zu tief gesenkten oder anderweitig nicht spezifikationsgemäß erstellten Löcher durch einfügen einer Metallhülse (beispielsweise aus Titan), Aufwärmen des Reparaturbereichs und die Verwendung übergroßer Bolzen (im Vergleich zur Spezifikation) bearbeitet und repariert. Ferner werden die Löcher bislang mit Harz behandelt und repariert (Harzreparatur).

Ferner können auch während der Nutzung der Faserverbundbauteile kleinere Oberflächenbeschädigungen begrenzten Ausmaßes entstehen, beispielsweise durch Partikel-Impact.

US 2019 / 061 280 A1 offenbart ein Verfahren zum Reparieren von Schäden an einem Verbundbauteil. Dabei wird zunächst eine Öffnung in dem Verbundbauteil erzeugt. Sodann werden mit Harz getränkte Fasern durch die Öffnung geführt und deren Enden beiderseitig radial ausgebreitet. Das Harz wird anschließend ausgehärtet.

US 2009 / 208 691 A1 offenbart ein Verfahren gemäß dem Oberbegriff des Anspruchs 1 zum Reparieren von Strukturkomponenten, bei dem Hülsen in ein zuvor vergrößertes Loch eingesteckt werden. Der durch die Hülsen geschaffene Durchgang wird nicht nachbearbeitet.

US 5 928 448 A offenbart ein Reparaturverfahren für Komposite mit Keramikmatrix.

DE 10 2015 101 328 A1 und DE 40 19 744 A1 offenbaren Werkzeuge, gemäß dem Oberbegriff des Anspruchs 13 die bei der Reparatur von Kompositbauteilen verwendet werden.

US 2007 / 177 330 A1 offenbart ein Verfahren zum Reparieren eines Kupfergitters für den Blitzschutz.

Der Erfindung liegt die Aufgabe zugrunde, ein verbessertes Bearbeitungsverfahren und zweckmäßige Vorrichtungen für dessen Durchführung zu schaffen.

Die Aufgabe wird durch den Gegenstand der unabhängigen Ansprüche gelöst. Bevorzugte Weiterbildungen sind Gegenstand der abhängigen Ansprüche.

Die Erfindung schafft ein Bearbeitungsverfahren zum Ändern oder Reparieren einer Oberflächenstelle einer Werkstückoberfläche eines Faserverbundwerkstücks, wobei die Oberflächenstelle zunächst einer konstruktiven Vorgabe nicht entspricht und nach dem Ändern der konstruktiven Vorgabe entspricht, mit den Schritten:
1.1 Senken der Oberflächenstelle, die eine Ausgangsbolzenöffnung ist, wobeizum Erzeugen einer Kontaktfläche und einer Vertiefung, wobei die Kontaktfläche durch weiteres Senken der Ausgangsbolzenöffnung erzeugt wird, und
1.2 Anlegen eines Faserverbundeinsatzkörpers an die Kontaktfläche und Fixieren des Faserverbundeinsatzkörpers an dem Faserverbundwerkstück in der Vertiefung, wobei der Faserverbundeinsatzkörper eine Pilotöffnung zum Positionieren und Ausrichten des Faserverbundeinsatzkörpers beim Anlegen und/oder Fixieren aufweist, und
1.3 Erzeugen einer Endbolzenöffnung in dem Faserverbundeinsatzkörper entsprechend der konstruktiven Vorgabe, wobei die Endbolzenöffnung durch Vergrößern der Pilotöffnung erzeugt wird.

Es ist bevorzugt, dass insbesondere in Schritt 1.1 die Kontaktfläche mittels Kegelsenken erzeugt wird, so dass die Kontaktfläche die Form einer Kegelmantelfläche aufweist.

Es ist bevorzugt, dass insbesondere in Schritt 1.1 die Kontaktfläche mittels Stufensenken erzeugt wird, so dass die Kontaktfläche die Form einer Zylindermantelfläche aufweist.

Es ist bevorzugt, dass insbesondere in Schritt 1.2 das Anlegen und/oder Fixieren derart erfolgen, dass die Oberflächenstelle eben oder bündig mit der Werkstückoberfläche ist.

Es ist bevorzugt, dass insbesondere in Schritt 1.2 der Faserverbundeinsatzkörper aufgrund des Zusammenwirkens mit der Kontaktfläche konzentrisch mit der Vertiefung positioniert wird.

Es ist bevorzugt, dass der Faserverbundeinsatzkörper kegelförmig oder kegelstumpfförmig ausgebildet ist.

Es ist bevorzugt, dass der Faserverbundeinsatzkörper zylinderförmig ausgebildet ist.

Es ist bevorzugt, dass Schritt 1.2 das Andrücken des Faserverbundeinsatzkörpers an das Faserverbundwerkstück umfasst.

Es ist bevorzugt, dass insbesondere in Schritt 1.2 ein Reinigen der Kontaktfläche zum Erzeugen einer Klebefläche aus der Kontaktfläche erfolgt.

Es ist bevorzugt, dass Schritt 1.2 das Verkleben des Faserverbundeinsatzkörpers mit dem Faserverbundwerkstück, insbesondere an der Klebefläche, umfasst.

Es ist bevorzugt, dass insbesondere in Schritt 1.2 der Faserverbundeinsatzkörper in Axialrichtung der Vertiefung über die Werkstückoberfläche hinausragt.

Es ist bevorzugt, dass Schritt 1.2 das Abtragen des Faserverbundeinsatzkörpers bis dieser eben und/oder bündig mit der Werkstückoberfläche ist umfasst.

Es ist bevorzugt, dass das Abtragen derart erfolgt, dass etwaige Beschichtungen der Werkstückoberfläche, insbesondere im Umgebungsbereich der Oberflächenstelle, zwar erfasst, insbesondere aufgeraut, aber nicht abgetragen werden.

Es ist bevorzugt, dass insbesondere in Schritt 1.2 das Abtragen mittels Schleifen erfolgt.

Es ist bevorzugt, dass nach Schritt 1.2 und, sofern vorhanden, bevorzugt vor Schritt 1.3 eine Funktionsbeschichtung, insbesondere Blitzschutzmaterialen, wiederhergestellt werden.

Vorzugsweise umfasst das Bearbeitungsverfahren den Schritt:
- Bereitstellen des Faserverbundeinsatzkörpers mittels Ausschneiden des Faserverbundeinsatzkörpers aus einem Faserverbundkörper.

Es ist bevorzugt, dass das Ausschneiden mittels Bohren in den Faserverbundkörper erfolgt.

Es ist bevorzugt, dass beim Ausschneiden der Faserverbundeinsatzkörper als Kegelform oder Kegelstumpfform ausgeschnitten wird.

Es ist bevorzugt, dass beim Ausschneiden der Faserverbundeinsatzkörper als Zylinderform ausgeschnitten wird.

Es ist bevorzugt, dass beim Ausschneiden die Pilotöffnung erzeugt wird.

Es ist bevorzugt, dass beim Ausschneiden die Pilotöffnung gebohrt wird.

Es ist bevorzugt, dass die weiter gesenkte Ausgangsbolzenöffnung die Vertiefung bildet.

Es ist bevorzugt, dass die Ausgangsbolzenöffnung eine Ausgangssenktiefe und die Endbolzenöffnung eine Endsenktiefe aufweisen, wobei die Ausgangssenktiefe und die Endsenktiefe jeweils relativ zu einer Werkstückoberfläche des Faserverbundwerkstücks definiert sind.

Es ist bevorzugt, dass das Bearbeitungsverfahren die Ausgangssenktiefe auf die Endsenktiefe ändert, insbesondere verringert.

Es ist bevorzugt, dass das Bearbeitungsverfahren einen Schritt 1.4 umfasst, der ein Senken der Endbolzenöffnung auf die Endsenktiefe enthält.

Es ist bevorzugt, dass insbesondere in Schritt 1.2 der Faserverbundeinsatzkörper aufgrund des Zusammenwirkens mit der Kontaktfläche konzentrisch mit der Ausgangsbolzenöffnung positioniert wird.

Es ist bevorzugt, dass die Pilotöffnung als Durchgangsöffnung oder Durchgangsbohrung ausgebildet ist.

Es ist bevorzugt, dass die Pilotöffnung als Sackloch oder Sacklochbohrung ausgebildet ist.

Es ist bevorzugt, dass die Pilotöffnung aufgrund des Zusammenwirkens des Faserverbundeinsatzkörpers mit der Kontaktfläche konzentrisch mit der Ausgangsbolzenöffnung positioniert wird.

Es ist bevorzugt, dass die Pilotöffnung aufgrund des Zusammenwirkens des Faserverbundeinsatzkörpers mit der Kontaktfläche parallel zu der Ausgangsbolzenöffnung ausgerichtet wird.

Es ist bevorzugt, dass insbesondere in Schritt 1.3 das Erzeugen mittels Bohren, insbesondere Aufbohren, erfolgt.

Es ist bevorzugt, dass insbesondere in Schritt 1.4 die Endsenktiefe so gewählt ist, dass ein für die Ausgangsbolzenöffnung bestimmter Bolzen, der mit der Werkstückoberfläche nicht bündig war, wenn dieser Bolzen in der Ausgangsbolzenöffnung eingesetzt war, nunmehr dieser Bolzen mit der Werkstückoberfläche, insbesondere im Rahmen der zulässigen Toleranzen, bündig ist, wenn dieser Bolzen in der Endbolzenöffnung eingesetzt ist.

Es ist bevorzugt, dass insbesondere in Schritt 1.2 der Faserverbundeinsatzkörper in Axialrichtung der Ausgangsbolzenöffnung über die Werkstückoberfläche hinausragt.

Es ist bevorzugt, dass Schritt 1.2 das Abtragen des Faserverbundeinsatzkörpers bis dieser eben und/oder bündig mit der Werkstückoberfläche ist umfasst.

Die Erfindung schafft daher insbesondere ein Bearbeitungsverfahren zum Ändern, insbesondere Verringern, einer Ausgangssenktiefe einer Ausgangsbolzenöffnung, insbesondere für einen Rundbolzen, eines Faserverbundwerkstücks, das vorzugsweise für eine Luftfahrzeugkomponente oder ein Luftfahrzeug ausgebildet ist, auf eine Endsenktiefe einer Endbolzenöffnung, wobei die Ausgangssenktiefe und die Endsenktiefe jeweils relativ zu einer Werkstückoberfläche des Faserverbundwerkstücks definiert sind, mit den Schritten:
- 1.1: weiteres Senken der Ausgangsbolzenöffnung zum Erzeugen einer Kontaktfläche;
- 1.2: Anlegen eines Faserverbundeinsatzkörpers an die Kontaktfläche und Fixieren des Faserverbundeinsatzkörpers an dem Faserverbundwerkstück;
- 1.3: Erzeugen der Endbolzenöffnung wenigstens teilweise in dem Faserverbundeinsatzkörper; und
- 1.4: Senken der Endbolzenöffnung auf die Endsenktiefe.

Dieses Bearbeitungsverfahren kann bevorzugt eine, mehrere oder alle der zuvor beschriebenen bevorzugten Ausgestaltungen haben.

Die Erfindung schafft ein Applikationswerkzeug zum Positionieren, Ausrichten und/oder Andrücken eines Faserverbundeinsatzkörpers an eine Klebefläche einer Bolzenöffnung eines Faserverbundwerkstücks, wobei das Applikationswerkzeug einen Stützrahmen, der zum ebenen Stützen des Applikationswerkzeugs an einer Werkstückoberfläche des Faserverbundwerkstücks ausgebildet ist, einen Führungsbolzen, der zum Positionieren und Ausrichten des Faserverbundeinsatzkörpers ausgebildet ist, wenn der Führungsbolzen den Faserverbundeinsatzkörper erfasst, und eine Andruckeinrichtung umfasst, die zum Anlegen einer Andruckkraft an den Faserverbundeinsatzkörper in Richtung auf das Faserverbundwerkstück ausgebildet ist.

Die Erfindung schafft ferner eine Bearbeitungsanordnung umfassend ein bevorzugtes Applikationswerkzeug, einen Faserverbundeinsatzkörper und ein Faserverbundwerkstück mit einer Vertiefung, insbesondere einer Bolzenöffnung, die eine Klebefläche aufweist, wobei der Stützrahmen das Faserverbundwerkstück erfasst, wobei der Faserverbundeinsatzkörper von dem Führungsbolzen derart erfasst ist, dass der Faserverbundeinsatzkörper teilweise in der Vertiefung und konzentrisch mit der Vertiefung angeordnet ist, wobei der Faserverbundeinsatzkörper von der Andruckeinrichtung auf die Klebefläche gedrückt wird.

Das Faserverbundwerkstück wird vorzugsweise bei einer Luftfahrzeugkomponente, beispielsweise einer Rumpfkomponente, eines Luftfahrzeugs verwendet. Denkbar ist auch eine Verwendung im Boots- oder Fahrzeugbau oder im Bereich der Windenergie.

Es sollte beachtet werden, dass die hierin verwendete Nummerierung von Verfahrensschritten lediglich der einfacheren Bezugnahme dient und keine Reihenfolge impliziert.

Nachfolgend werden Vorteile und Wirkungen der hierin beschriebenen Verfahren und Vorrichtungen näher erläutert. Es sollte beachtet werden, dass die Verfahren und Vorrichtungen dadurch nicht auf diese Vorteile und Wirkungen beschränkt werden. Ferner müssen nicht alle Vorteile und Wirkungen in jeder Ausführungsart der Erfindung verwirklicht sein.

Mittels des Bearbeitungsverfahrens kann eine Korrektur von Beschädigungen eines Faserverbundwerkstücks (beispielsweise aufgrund Impact) durch Einsetzen eines Faserverbundeinsatzkörpers in die Schadensstelle nach vorherigem Senken erfolgen. Damit ist ein Faserverbundwerkstück erhältlich, das eine ebene Oberfläche ohne Loch, Bohrung und/oder Senkung aufweist.

Mit den hierin beschriebenen Maßnahmen können auch nach der Bearbeitung bzw. Reparatur der Bolzenöffnung, die nominellen für die Bolzenöffnung bestimmten Bolzen/Befestiger benutzt werden. Der Fokus ist vorliegend auf der Änderung bzw. Verringerung der Senktiefe der Bolzenöffnungen; mit anderen Worten die Korrektur einer Ausgangssenktiefe auf eine (gewünschte) Endsenktiefe.

Ferner können durch dieses Verfahren Beschädigungen mittels Einbringen einer Senkung, beispielsweise Kegelsenkung oder Stufensenkung, entfernt und das defekte Material durch den Faserverbundeinsatzkörper ersetzt werden.

Das hierin beschriebene Bearbeitungsverfahren, das auch als Kegelreparaturverfahren bezeichnet wird, kann so einfach gestaltet sein, dass ein einfaches Anlernen ausreichen kann, um das Bearbeitungsverfahren zuverlässig nach den in der Luftfahrt üblichen Standards durchzuführen.

Das Faserverbundwerkstück kann beispielsweise ein Prepregmaterial sein. Der Faserverbundkörper, aus dem der Faserverbundeinsatzkörper ausgeschnitten werden kann, ist vorzugsweise ebenfalls ein Prepregmaterial.

Zum Fixieren des Faserverbundeinsatzkörpers werden bevorzugt ZweiKomponenten-Klebstoffe verwendet, die auf Epoxy basieren können. Dabei wird der Klebstoff bevorzugt so gewählt, dass ein Aushärten bei üblicher Raumtemperatur zügig erfolgen kann. Der Klebstoff kann ferner danach ausgewählt sein, dass dieser bereits in der Fertigung für andere Anbauteile, beispielsweise Verbindungsklammern von Faserverbundstrukturen verwendet wird. Hilfreich ist hier auch die standardisierte Verfügbarkeit des Klebstoffs in vorgefertigten Applikationsvorrichtungen, beispielsweise Spritzen.

Beim Ausschneiden des Faserverbundeinsatzkörpers, kann ein dezidiertes Werkzeug verwendet werden. Vorteilhaft kann es sein, den vorzugsweise plattenförmigen Faserverbundkörper zunächst auf eine Unterlage, beispielsweise aus Holz, aufzukleben und erst dann die Faserverbundeinsatzkörper auszuschneiden. Versuche der Anmelderin haben ergeben, dass mit einer derartigen Anordnung selbst bei mikroskopischer Oberflächenuntersuchung keine Schäden am Material erkennbar waren. Insbesondere waren kein Faserausbruch aus der Schnittfläche erkennbar, die lediglich kleinere Bearbeitungsspuren aufwies.

Als vorteilhaft hat sich auch eine gesonderte Reinigung des Faserverbundeinsatzkörpers, insbesondere mittels Ultraschallbad, herausgestellt.

Vor dem Bearbeitungsverfahren kann zunächst eine Abweichung in der Senktiefe erkannt werden, die dazu führt, dass ein in die Bolzenöffnung eingesetzter Bolzen zu tief unter der Werkstückoberfläche des Faserverbundwerkstücks liegt. Nach Entfernen des Bolzens kann sodann die bestehende Senktiefe vergrößert werden (vorzugsweise ab etwa 0,2 mm). Anschließend kann eine gründliche Reinigung der Schnittfläche erfolgen. Auf die gereinigte Schnittfläche wird Klebstoff aufgebracht. Der Klebstoff kann auf beide Teile, d.h. das Faserverbundwerkstück und den Faserverbundeinsatzkörpers aufgetragen. Der Faserverbundeinsatzkörper wird in die Bolzenöffnung eingesetzt und positioniert/ausgerichtet. Das Aushärten des Klebstoffs erfolgt bei Raumtemperatur, d.h. ohne Applikation zusätzlicher Wärme.(je nach Klebstoffsystem kann jedoch eine lokale Wärmebehandlung bevorzugt oder notwendig sein). Der Klebstoff wird beispielsweise für 2 Stunden ausgehärtet. Die Klebstoffmenge ist bevorzugt überdimensioniert.

Der Faserverbundeinsatzkörper ist vorzugsweise überdimensioniert, so dass er über die Werkstückoberfläche hinausragt. In diesem Fall kann der Faserverbundeinsatzkörper abgeschliffen werden, bis der Faserverbundeinsatzkörper bündig mit der Werkstückoberfläche ist. Beim Schleifen wird bevorzugt darauf geachtet, etwaige Funktionsbeschichtungen des Faserverbundwerkstücks nicht zu beschädigen. Dazu kann ein Blitzschutzmaterial, beispielsweise in Gestalt eines Metallgeflechts, gehören.

In dem Faserverbundeinsatzkörper wird ein Loch gebohrt oder eine bereits vorgebohrte Öffnung erweitert, so dass der ursprüngliche Bolzen grundsätzlich aufgenommen werden kann. Schließlich wird das neugebohrte Loch gesenkt auf die gewünschte Senktiefe, so dass der in das Loch eingesetzte Bolzen bündig mit der Werkstückoberfläche ist.

Versuche der Anmelderin, bei denen der Zeitaufwand des hierin beschriebenen Verfahrens mit der herkömmlichen Methode verglichen wurde, haben ergeben, dass ein signifikanter Zeitvorteil von etwa 7 Stunden - nahezu ein ganzer üblicher Arbeitstag - ermöglicht wird. Wenn das hierin beschriebene Verfahren an Stelle einer Schäftreparatur verwendet wird, kann der Zeitvorteil noch weit mehr betragen.

Wahlweise können ein oder mehrere Inspektionen während der Bearbeitung durchgeführt werden.

In Bezug auf das Bearbeitungs- bzw. Applikationswerkzeug werden vorzugsweise folgende Vorteile gewünscht:
- Verbessern der Rechtwinkligkeit der Bohrachse des existierenden Zylinderlochs relative zu der Werkstückoberfläche;
- Verbessern der Rechtwinkligkeit der Pilotöffnung in dem Faserverbundeinsatzkörper bzw. Faserverbundeinsatzkegels relativ zu der Werkstückoberfläche;
- Verbessern der Positionierung des Zylinderlochbereichs zu der Pilotöffnung in dem Faserverbundeinsatzkörper bzw. Faserverbundeinsatzkegel;
- Anlegen eines gewissen Andrucks an den Faserverbundeinsatzkörper bzw. Faserverbundeinsatzkegel und die Klebstoffschicht während des Aushärtens, um eine möglichst kleine Klebeliniendicke zu erreichen und/oder Poren, insbesondere durch überdimensionierte Klebstoffmenge, zu verschließen.

Das Werkzeug kann mittels moderner additiver Fertigungsmethoden oder konventionell gefertigt werden. Vorzugsweise ist der Stützrahmen des Applikationswerkzeugs als Dreibein ausgebildet.

Es sollte beachtet werden, dass vorliegend die Idee insbesondere anhand einer Reparatur einer Bolzenöffnung erläutert wird. Die Erfindung ist jedoch nicht hierauf beschränkt. So können an Stelle von Sacklöchern auch Durchgangsöffnungen verwendet werden und umgekehrt. Auch sind die Senkungen nicht nur auf Kegelsenkungen beschränkt; es können auch Stufensenkungen verwendet werden. Insbesondere können auch je nach Anwendungsfall geeignete Kombinationen dieser Maßnahmen verwendet werden. Alternativ oder zusätzlich zu der Bolzenöffnung kann auch eine Oberflächenbeschädigung mittels des hierin beschriebenen Verfahrens repariert werden.

Ausführungsbeispiele werden anhand der beigefügten schematischen Zeichnungen näher erläutert. Darin zeigt:
- Fig. 1: eine Querschnittsansicht einer Ausgangsbolzenöffnung;
- Fig. 2: eine Perspektivansicht der Ausgangsbolzenöffnung;
- Fig. 3: eine Querschnittsansicht einer weiter gesenkten Ausgangsbolzenöffnung;
- Fig. 4: eine Perspektivansicht der weiter gesenkten Ausgangsbolzenöffnung;
- Fig. 5: eine Querschnittsansicht der Ausgangsbolzenöffnung mit Faserverbundeinsatzkörper;
- Fig. 6: ein Ausführungsbeispiel eines Applikationswerkzeugs;
- Fig. 7: eine Detailansicht des Faserverbundeinsatzkörpers aus Fig. 6;
- Fig. 8: eine weitere Detailansicht des Faserverbundeinsatzkörpers aus Fig. 6;
- Fig. 9: eine Ansicht des Faserverbundeinsatzkörpers aus Fig. 6 von unten;
- Fig. 10: eine Querschnittsansicht mit abgetragenem Faserverbundeinsatzkörper;
- Fig. 11: eine Perspektivansicht eines Faserverbundwerkstücks;
- Fig. 12: eine Perspektivansicht eines weiteren Faserverbundwerkstücks;
- Fig. 13: eine Querschnittsansicht mit eingesetztem Bolzen;
- Fig. 14: eine Perspektivansicht eines Faserverbundwerkstücks;
- Fig. 15: eine Perspektivansicht eines Faserverbundwerkstücks aus Fig. 14;

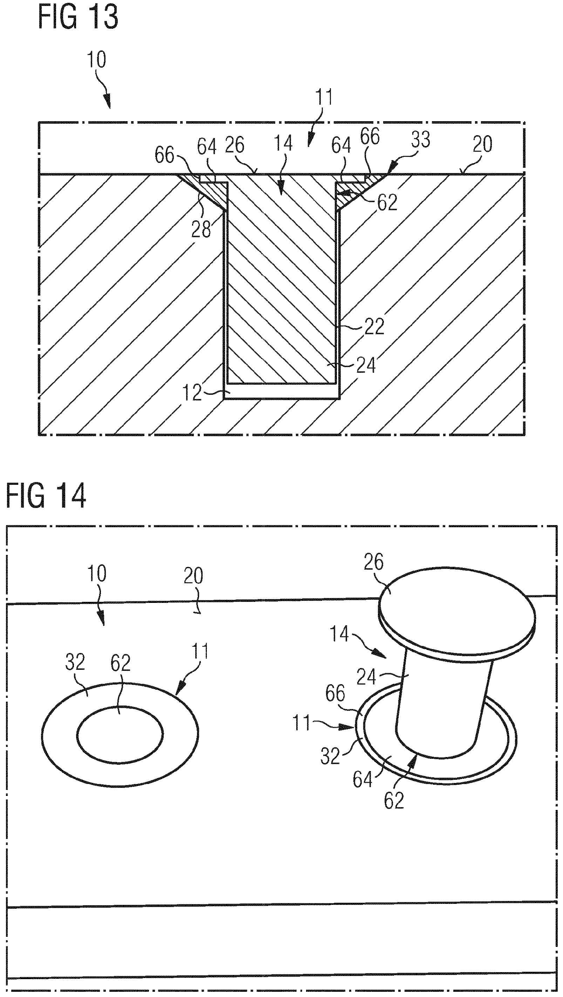

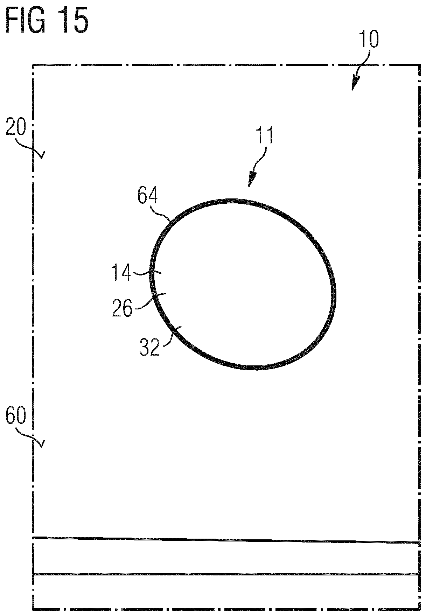

- Fig. 15: eine Perspektivansicht eines Faserverbundwerkstücks aus Fig. 14;

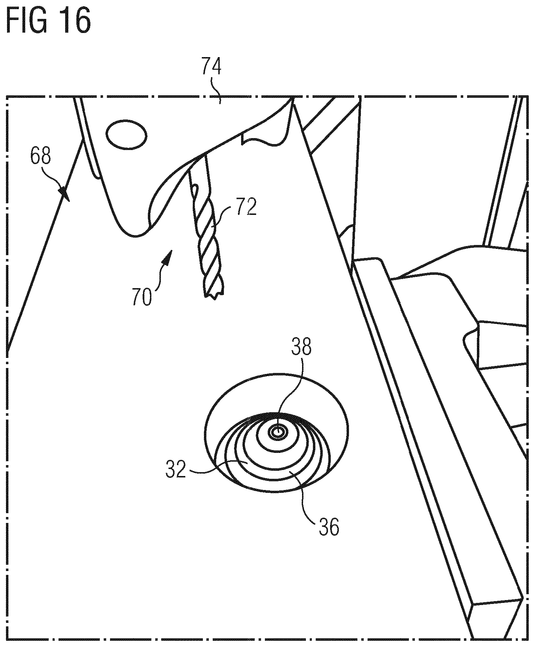

- Fig. 16: eine Ansicht betreffend das Ausschneiden des Faserverbundeinsatzkörpers;

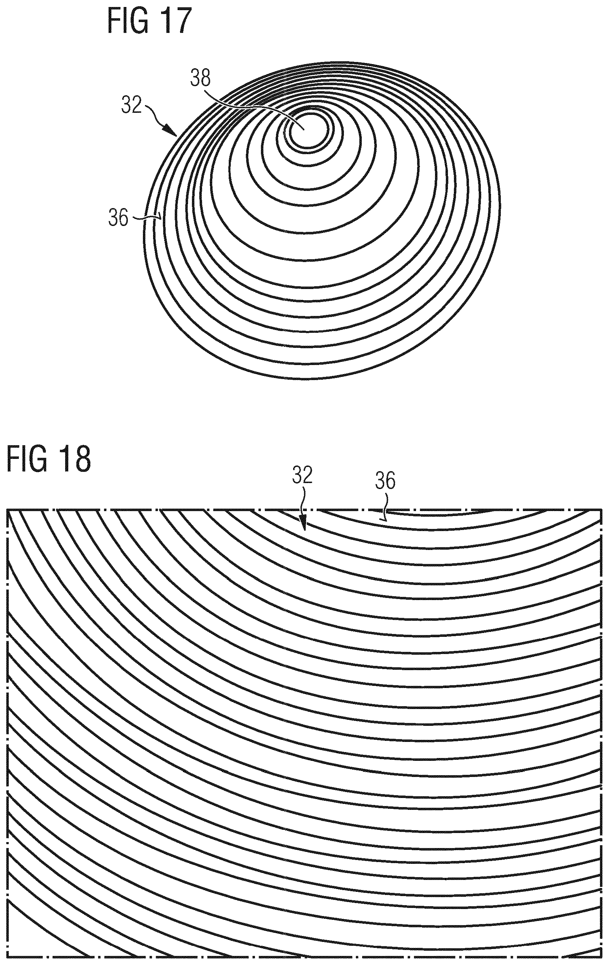

- Fig. 17: eine Ansicht des in Fig. 16 extrahierten Faserverbundeinsatzkörpers; und
- Fig. 18: eine vergrößerte Ansicht der Schnittfläche des extrahierten Faserverbundeinsatzkörpers.

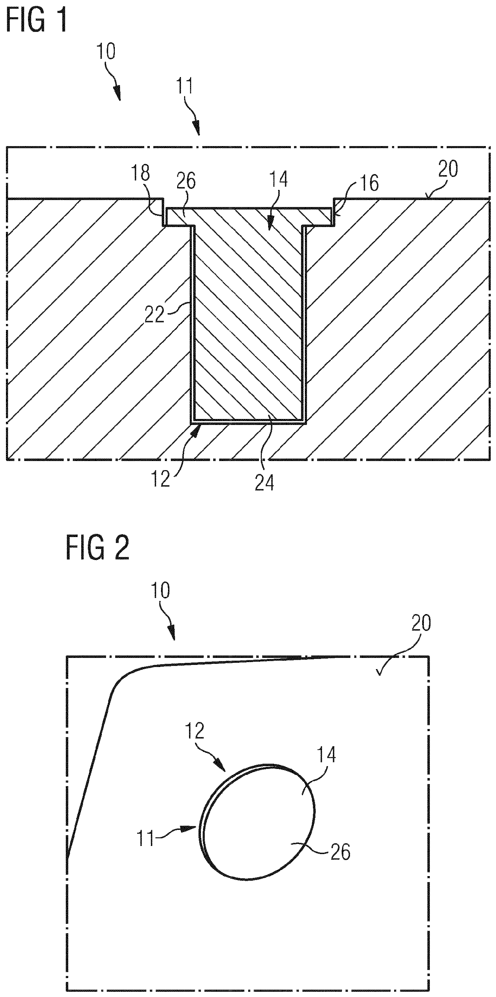

Es wird zunächst auf Fig. 1 und Fig. 2 Bezug genommen, die ein Faserverbundwerkstück 10 zeigen. Das Faserverbundwerkstück 10 kann beispielsweise Teil einer Luftfahrzeugkomponente sein, etwa eines Rumpfpanels oder eines Verkleidungselements.

Das Faserverbundwerkstück 10 weist eine zu bearbeitende Oberflächenstelle 11 auf. Die Oberflächenstelle 11 kann beispielsweise eine Ausgangsbolzenöffnung 12 sein. Die Oberflächenstelle 11 kann auch eine durch Impact entstandene Beschädigung des Faserverbundwerkstücks 10 sein. Nachfolgend werden die Beispiele anhand der Ausgangsbolzenöffnung 12 erläutert. Es ist jedoch ersichtlich, dass die hierin beschriebenen Maßnahmen auch für beschädigte Oberflächenstellen 11 geeignet sind.

Das Faserverbundwerkstück 10 weist die Ausgangsbolzenöffnung 12 für einen Bolzen 14 auf. Der Bolzen 14 ist beispielsweise ein Rundbolzen und kann ein Gewinde aufweisen.

Die Ausgangsbolzenöffnung 12 weist eine Ausgangssenkung 16, beispielsweise in Zylinderform, auf. Die Ausgangssenkung 16 hat eine Ausgangssenktiefe 18. Die Ausgangssenktiefe 18 wird von einer Werkstückoberfläche 20 des Faserverbundwerkstücks 10 gemessen. Die Ausgangsbolzenöffnung 12 wird hier als Sackloch dargestellt, kann aber auch ein Durchgangsloch oder eine andere Lochart sein.

Ferner weist die Ausgangsbolzenöffnung 12 einen Schaftbereich 22 zum Aufnehmen eines Bolzenschaftes 24 des Bolzens 14 auf. Der Bolzen 14 umfasst ferner einen Bolzenkopf 26, der in der Ausgangssenkung 16 angeordnet werden kann.

Wie insbesondere in Fig. 1 ersichtlich, ist der Bolzenkopf 26 tiefer als die Werkstückoberfläche 20 angeordnet, so dass der Bolzen 14 mit der Werkstückoberfläche 20 nicht bündig ist. Der Abstand zwischen dem Bolzen 14 und der Werkstückoberfläche 20 beträgt in der Regel weniger als 1 mm, aber mehr als die erlaubte Toleranz zulässt. Der Bolzen 14 entspricht daher nicht einer konstruktiven Vorgabe.

Um nun die Ausgangssenktiefe 18 so zu ändern, dass der Bolzen 14 bündig mit der Werkstückoberfläche 20 ist, wird das Faserverbundwerkstück 10 wie nachfolgend beschrieben bearbeitet.

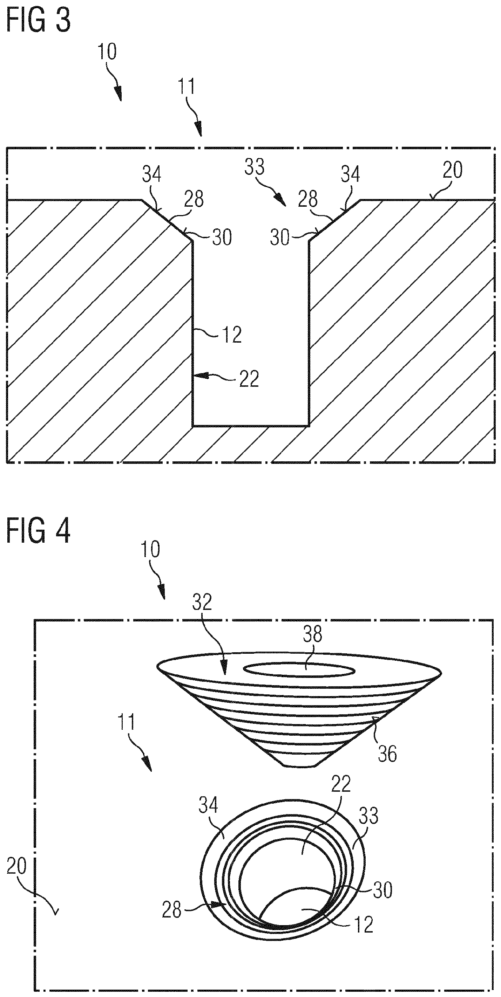

Wie in Fig. 3 und Fig. 4 dargestellt, wird die Ausgangsbolzenöffnung 12 mittels eines Kegelsenkers weiter gesenkt, um eine Kegelsenkung 28 zu erhalten. Dabei kann die Ausgangssenkung 16 (bzw. eine Beschädigung) vollständig entfernt werden. Der Kegelwinkel beträgt vorzugsweise zwischen 90° und 130°. Insbesondere beträgt der Kegelwinkel 100°. Andere Winkel sind je nach Anwendungsfall nicht ausgeschlossen.

Das Kegelsenken schafft zudem eine Kontaktfläche 30 für einen, vorzugsweise kegelförmig bzw. kegelstumpfförmig ausgebildeten, Faserverbundeinsatzkörper 32. Vorzugsweise wird die Kontaktfläche 30 gereinigt, um einen Klebefläche 34 zu erhalten.

Ferner schafft das Kegelsenken eine Vertiefung 33 für den Faserverbundeinsatzkörper 32.

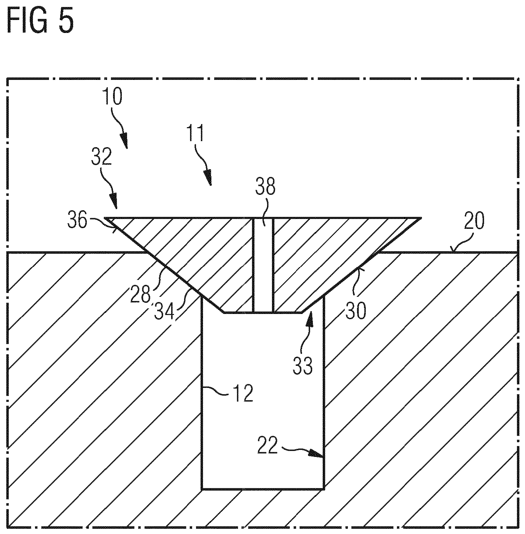

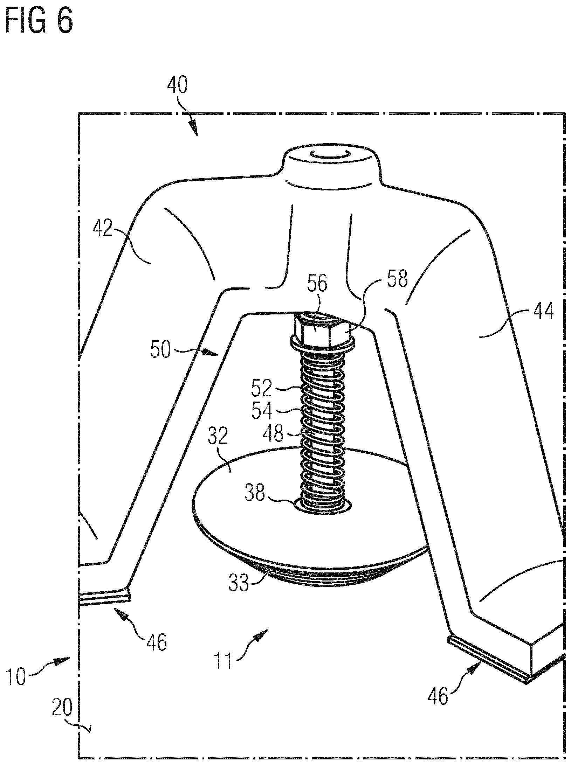

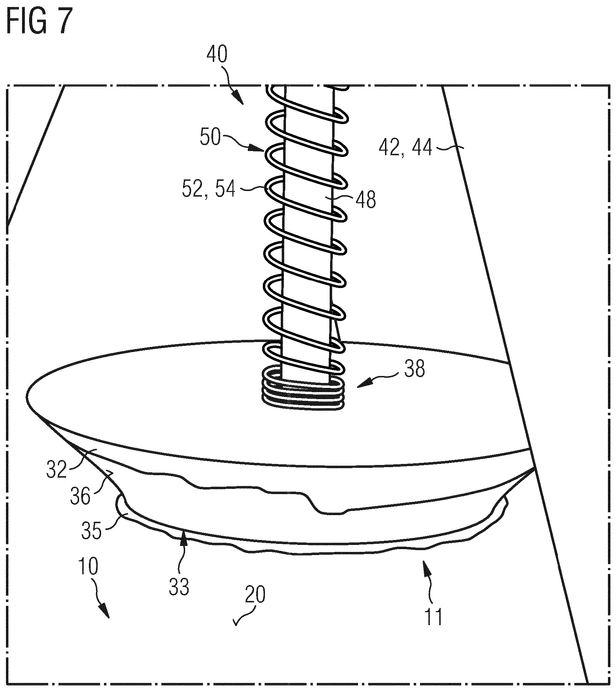

Sodann wird Harzmaterial als Klebstoff 35 auf die Klebefläche 34 und eine Mantelfläche 36 des Faserverbundeinsatzkörpers 32 aufgebracht. Die Menge des Klebstoffs 35 ist bevorzugt überdimensioniert, um etwaige Poren an der Klebefläche 34 bzw. der Mantelfläche 36 zu verschließen. Ferner können damit eingeschlossene Luftblasen aus dem Klebebereich heraus befördert werden. Der Faserverbundeinsatzkörper 32 wird, wie in Fig. 5 bis Fig. 7 näher dargestellt, in die Ausgangsbolzenöffnung 12 eingesetzt und an die Kontaktfläche 30, insbesondere die Klebefläche 34, angelegt. Der Faserverbundeinsatzkörper 32 kann eine Pilotöffnung 38 zum Positionieren und Ausrichten aufweisen. Hierfür kann ein Applikationswerkzeug 40 verwendet werden.

Das Applikationswerkzeug 40 weist einen Stützrahmen 42 auf. Der Stützrahmen 42 ist vorzugsweise als Dreibein 44 ausgebildet und kann an dem Faserverbundwerkstück 10 lösbar befestigt werden, beispielsweise mittels lösbarer Klebeverbindungen 46. Es können auch Vakuumsaugnäpfe oder Magnete für das lösbare Befestigen verwendet werden.

Das Applikationswerkzeug 40 umfasst ferner einen Führungsbolzen 48, der vertikal verschiebbar an dem Stützrahmen 40 gestützt ist. Der Führungsbolzen 48 kann den Faserverbundeinsatzkörper 32 erfassen und in die Pilotöffnung 38 eingreifen, um den Faserverbundeinsatzkörper 32 konzentrisch zu der Ausgangsbolzenöffnung 12 zu positionieren und/oder parallel zu der Ausgangsbolzenöffnung 12 auszurichten.

Das Applikationswerkzeug 40 kann zudem eine Andruckeinrichtung 50 aufweisen, mittels der eine Kraft in Axialrichtung des Faserverbundeinsatzkörpers 32 in Richtung auf das Faserverbundwerkstück 10 ausgeübt werden kann. Die Andruckeinrichtung 50 umfasst vorliegend ein elastisches Element 52, beispielsweise eine Spiralfeder 54, deren ausgeübte Kraft durch ein Einstellelement 56, zum Beispiel eine Mutter 58, eingestellt werden kann.

Insbesondere aufgrund des Zusammenwirkens des Faserverbundeinsatzkörpers 32 mit der Kontaktfläche 30, gegebenenfalls unter Zuhilfenahme des Applikationswerkzeugs 40, kann der Faserverbundeinsatzkörper 32 konzentrisch mit und/oder parallel zu der Ausgangsbolzenöffnung 12 positioniert bzw. ausgerichtet werden.

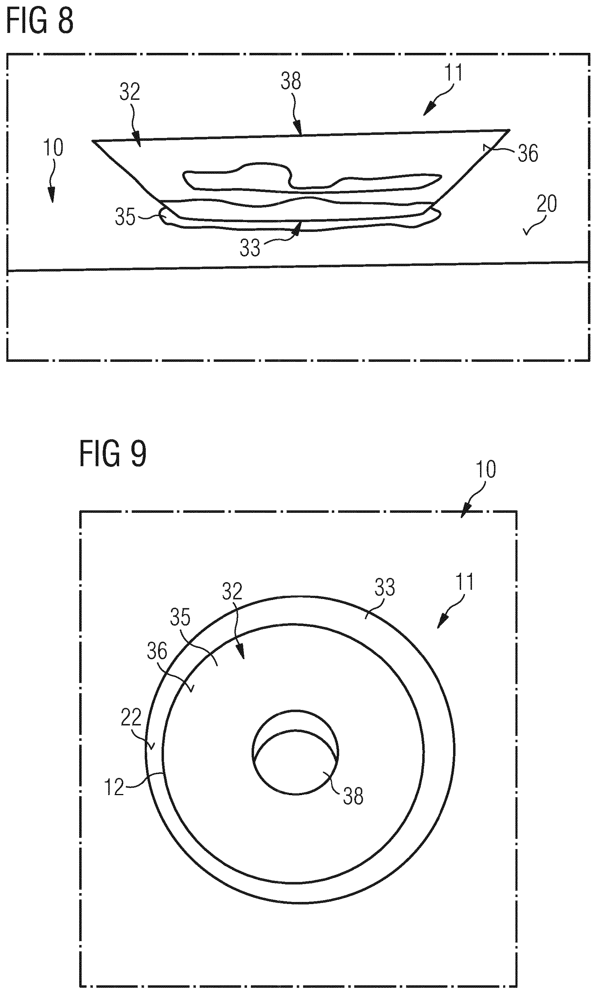

Das Resultat dieses Schrittes ist insbesondere in Fig. 8 und Fig. 9 ersichtlich. Der Faserverbundeinsatzkörper 32 ist vorzugsweise so ausgebildet, dass er in Axialrichtung der Ausgangsbolzenöffnung 12 die Werkstückoberfläche 20 überragt. Ferner ist die übergroße Menge Klebstoff 35 ersichtlich.

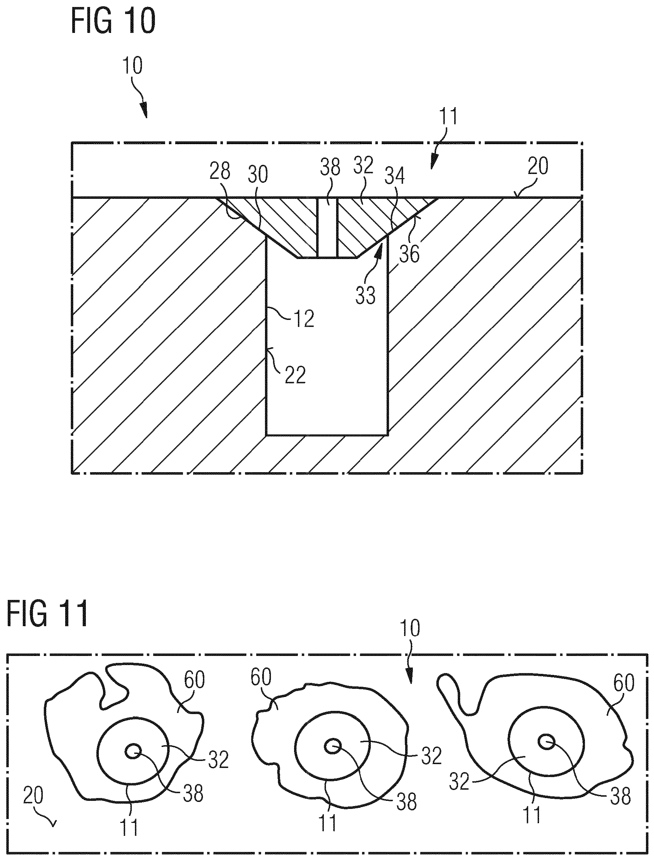

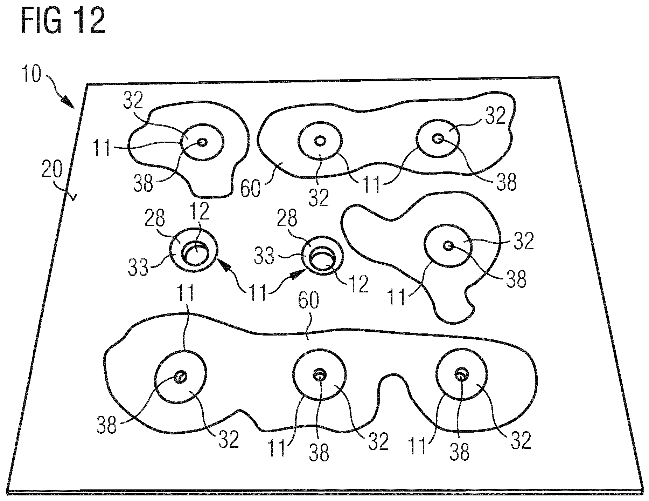

Der Faserverbundeinsatzkörper 32 wird, wie in Fig. 10 bis Fig. 12 dargestellt, abgetragen, insbesondere abgeschliffen, bis der Faserverbundeinsatzkörper 32 bündig mit der Werkstückoberfläche 20 ist. Dabei wird darauf geachtet, dass beim Abtragen eine etwaige Funktionsbeschichtung 60 nicht entfernt wird. Die Faserverbundeinsatzkörper 32 werden gegebenenfalls mit der Funktionsbeschichtung 60 versehen und somit integriert. Beispiel für eine Funktionsbeschichtung 60 ist etwa Blitzschutzmaterial.

Wie in Fig. 13 bis Fig. 15 dargestellt, wird die Pilotöffnung 38 erweitert, insbesondere aufgebohrt, um eine Endbolzenöffnung 62 zu schaffen. Aufgrund der zuvor vorgenommenen Positionierung und Ausrichtung, ist auch die Endbolzenöffnung 62 konzentrisch und parallel zu der Ausgangsbolzenöffnung 12. Es sollte beachtet werden, dass dies grundsätzlich auch ohne die Pilotöffnung 38 möglich ist, jedoch etwa mehr Geschick erfordern kann.

Die Endbolzenöffnung 62 wird nunmehr gesenkt, um eine Endsenkung 64 zu erhalten. Die Endsenkung 64 weist eine Endsenktiefe 66 auf, die so ausgebildet ist, dass der Bolzen 14, wenn er in die Endbolzenöffnung eingesetzt ist, bündig mit der Werkstückoberfläche 20 ist.

Nachfolgend wird anhand Fig. 16 bis Fig. 18 näher erläutert, wie der Faserverbundeinsatzkörper 32 hergestellt werden kann.

Zunächst kann ein Faserverbundkörper 68 bereitgestellt werden, der vorzugsweise aus demselben Material hergestellt ist, wie das Faserverbundwerkstück 10.

Ein Faserverbundschneidwerkzeug 70 wird verwendet, um den Faserverbundeinsatzkörper 32 aus dem Faserverbundkörper 68 auszuschneiden. Das Faserverbundschneidwerkzeug 70 weist bevorzugt einen zentralen Bohrerabschnitt 72 und einen Schneidenkopf 74. Der Bohrerabschnitt 72 formt beim Ausschneiden die Pilotöffnung 38, während der Schneidenkopf 74 die Mantelfläche 36 des Faserverbundeinsatzkörpers 32 formt.

Der Faserverbundeinsatzkörper 32 kann mittels eines Ultraschallbades gereinigt und anschließend verwendet werden.

In Fig. 18 ist die Schnittfläche bzw. Mantelfläche 36 näher dargestellt. Wie ersichtlich, ragen keine Fasern aus der Schnittfläche heraus und lediglich kleinere Bearbeitungsspuren sind erkennbar.

Es wird daher vorgeschlagen, um die Durchlaufzeit beim Reparieren zu tief gesenkter Bolzenöffnungen in Faserverbundwerkstücken zu verringern, in die zu tief gesenkte Bolzenöffnung einen Faserverbundeinsatzkörper aus Faserverbundmaterial einzufügen. Der Einsatzkörper wird mit dem Faserverbundwerkstück verklebt. In den Einsatz wird eine neue Bolzenöffnung gebohrt, die anschließend auf die korrekte Senktiefe gesenkt wird. Bei dem Verfahren kann ein dreibeiniges Applikationswerkzeug verwendet werden, das den Faserverbundeinsatzkörper korrekt positioniert, ausrichtet und während des Aushärtens des Klebstoffs an das Faserverbundwerkstück andrückt.

Mit den hierin Beschriebenen Maßnahmen kann die Durchlaufzeit der Bearbeitung bzw. Reparatur von zu tief gesenkten Bolzenöffnungen in Faserverbundwerkstücken deutlich - um fast bis zu 7 Stunden pro Bolzenöffnung - reduziert werden. Ferner kann das Verfahren einfach angelernt und daher von mehr Arbeitern als bisher zuverlässig durchgeführt werden.

### Bezugszeichenliste:

- 10: Faserverbundwerkstück
- 11: Oberflächenstelle
- 12: Ausgangsbolzenöffnung
- 14: Bolzen
- 16: Ausgangssenkung
- 18: Ausgangssenktiefe
- 20: Werkstückoberfläche
- 22: Schaftbereich
- 24: Bolzenschaft
- 26: Bolzenkopf
- 28: Kegelsenkung
- 30: Kontaktfläche
- 32: Faserverbundeinsatzkörper
- 33: Vertiefung
- 34: Klebefläche
- 35: Klebstoff
- 36: Mantelfläche
- 38: Pilotöffnung
- 40: Applikationswerkzeug
- 42: Stützrahmen
- 44: Dreibein
- 46: Klebeverbindung
- 48: Führungsbolzen
- 50: Andruckeinrichtung
- 52: elastisches Element
- 54: Spiralfeder
- 56: Einstellelement
- 58: Mutter
- 60: Funktionsbeschichtung
- 62: Endbolzenöffnung
- 64: Endsenkung
- 66: Endsenktiefe
- 68: Faserverbundkörper
- 70: Faserverbundschneidwerkzeug
- 72: Bohrerabschnitt
- 74: Schneidenkopf

## Patentansprüche

1. Bearbeitungsverfahren zum Ändern oder Reparieren einer Oberflächenstelle (11) einer Werkstückoberfläche (20) eines Faserverbundwerkstücks (10), wobei die Oberflächenstelle (11) zunächst einer konstruktiven Vorgabe nicht entspricht und nach dem Ändern der konstruktiven Vorgabe entspricht, mit den Schritten:
1.1 Senken der Oberflächenstelle (11), die eine Ausgangsbolzenöffnung (12) ist, zum Erzeugen einer Kontaktfläche (30) und einer Vertiefung (33), wobei die Kontaktfläche (30) durch weiteres Senken der Ausgangsbolzenöffnung (12) erzeugt wird;
1.2 Anlegen eines Faserverbundeinsatzkörpers (32) an die Kontaktfläche (30) und Fixieren des Faserverbundeinsatzkörpers (32) an dem Faserverbundwerkstück (10) in der Vertiefung (33), wobei der Faserverbundeinsatzkörper (32) eine Pilotöffnung (38) zum Positionieren und Ausrichten des Faserverbundeinsatzkörpers (32) beim Anlegen und/oder Fixieren aufweist; **dadurch gekennzeichnet, dass** das Verfahren den folgenden Schritt aufweist:
1.3 Erzeugen einer Endbolzenöffnung (62) in dem Faserverbundeinsatzkörper (32) entsprechend der konstruktiven Vorgabe, wobei die Endbolzenöffnung (62) durch Vergrößern der Pilotöffnung (38) erzeugt wird.

2. Bearbeitungsverfahren nach Anspruch 1, **dadurch gekennzeichnet, dass** in Schritt 1.2 der Faserverbundeinsatzkörper (32) aufgrund des Zusammenwirkens mit der Kontaktfläche (30) konzentrisch mit der Vertiefung (33) positioniert wird.

3. Bearbeitungsverfahren nach einem der vorhergehenden Ansprüche, **dadurch gekennzeichnet, dass** Schritt 1.2
- das Andrücken des Faserverbundeinsatzkörpers (32) an das Faserverbundwerkstück (10); und/oder
- das Verkleben des Faserverbundeinsatzkörpers (32) mit dem Faserverbundwerkstück (10) umfasst.

4. Bearbeitungsverfahren nach einem der vorhergehenden Ansprüche, **dadurch gekennzeichnet, dass** in Schritt 1.2 der Faserverbundeinsatzkörper (32) in Axialrichtung der Vertiefung (33) über die Werkstückoberfläche (20) hinausragt, wobei Schritt 1.2 das Abtragen des Faserverbundeinsatzkörpers (32) bis dieser eben und/oder bündig mit der Werkstückoberfläche (20) ist umfasst.

5. Bearbeitungsverfahren nach Anspruch 4, **dadurch gekennzeichnet, dass** das Abtragen derart erfolgt, dass etwaige Beschichtungen (60) der Werkstückoberfläche (20) zwar erfasst, insbesondere aufgeraut, aber nicht abgetragen werden.

6. Bearbeitungsverfahren nach Anspruch 4 oder 5, **dadurch gekennzeichnet, dass** in Schritt 1.2 das Abtragen mittels Schleifen erfolgt.

7. Bearbeitungsverfahren nach einem der vorhergehenden Ansprüche, dass nach Schritt 1.2 und, sofern vorhanden, bevorzugt vor Schritt 1.3 eine Funktionsbeschichtung (60), insbesondere Blitzschutzmaterialen, wiederhergestellt werden.

8. Bearbeitungsverfahren nach einem der vorhergehenden Ansprüche, **gekennzeichnet durch** den Schritt:
- Bereitstellen des Faserverbundeinsatzkörpers (32) mittels Ausschneiden oder mittels Ausbohren des Faserverbundeinsatzkörpers (32) aus einem Faserverbundkörper (68).

9. Bearbeitungsverfahren nach einem der Ansprüche 1 bis 8, **dadurch gekennzeichnet, dass** in Schritt 1.2
- der Faserverbundeinsatzkörper (32) aufgrund des Zusammenwirkens mit der Kontaktfläche (30) konzentrisch mit der Ausgangsbolzenöffnung (12) positioniert wird; und/oder
- die Pilotöffnung (38) aufgrund des Zusammenwirkens des Faserverbundeinsatzkörpers (32) mit der Kontaktfläche (30) konzentrisch mit der Ausgangsbolzenöffnung (12) positioniert wird und/oder parallel zu der Ausgangsbolzenöffnung (12) ausgerichtet wird; und/oder
- der Faserverbundeinsatzkörper (32) in Axialrichtung der Ausgangsbolzenöffnung (12) über die Werkstückoberfläche (20) hinausragt, wobei Schritt 1.2 das Abtragen des Faserverbundeinsatzkörpers (32) bis dieser bündig mit der Werkstückoberfläche (20) ist umfasst.

10. Bearbeitungsverfahren nach einem der Ansprüche 1 bis 9, **dadurch gekennzeichnet, dass** in Schritt 1.3 das Erzeugen mittels Bohren, insbesondere Aufbohren, erfolgt.

11. Bearbeitungsverfahren nach einem der Ansprüche 1 bis 10, **dadurch gekennzeichnet, dass** die Ausgangsbolzenöffnung (12) eine Ausgangssenktiefe (18) und die Endbolzenöffnung (62) eine Endsenktiefe (66) aufweisen, wobei die Ausgangssenktiefe (18) und die Endsenktiefe (66) jeweils relativ zu einer Werkstückoberfläche (20) des Faserverbundwerkstücks (10) definiert sind, wobei das Bearbeitungsverfahren die Ausgangssenktiefe (18) auf die Endsenktiefe (66) ändert, insbesondere verringert, und einen Schritt 1.4 umfasst, der ein Senken der Endbolzenöffnung (62) auf die Endsenktiefe (66) enthält.

12. Bearbeitungsverfahren nach Anspruch 11, **dadurch gekennzeichnet, dass** in Schritt 1.4 die Endsenktiefe (66) so gewählt ist, dass ein für die Ausgangsbolzenöffnung (12) bestimmter Bolzen (14), der mit der Werkstückoberfläche (20) nicht bündig war, wenn dieser Bolzen (14) in der Ausgangsbolzenöffnung (12) eingesetzt war, nunmehr dieser Bolzen (14) mit der Werkstückoberfläche (20) bündig ist, wenn dieser Bolzen (14) in der Endbolzenöffnung (62) eingesetzt ist.

13. Applikationswerkzeug (40), insbesondere zur Verwendung in einem Bearbeitungsverfahren nach einem der vorhergehenden Ansprüche, wobei das Applikationswerkzeug (40) zum Positionieren, Ausrichten und Andrücken eines Faserverbundeinsatzkörpers (32) an eine Klebefläche (34) einer Bolzenöffnung (12) eines Faserverbundwerkstücks (10) ausgebildet ist, wobei das Applikationswerkzeug (40) einen Stützrahmen (42) umfasst, der zum ebenen Stützen des Applikationswerkzeugs (40) an einer Werkstückoberfläche (20) des Faserverbundwerkstücks (10) ausgebildet ist, **dadurch gekennzeichnet, dass** das Applikationswerkzeug einen Führungsbolzen (48), der zum Positionieren und Ausrichten des Faserverbundeinsatzkörpers (32) ausgebildet ist und der vertikal verschiebbar an dem Stützrahmen 40 gestützt ist, und eine Andruckeinrichtung (50) umfasst, die zum Anlegen einer Andruckkraft an den Faserverbundeinsatzkörper (32) in Richtung auf das Faserverbundwerkstück (10) ausgebildet ist, wobei der Führungsbolzen (48) ausgebildet ist, den Faserverbundeinsatzkörper (32) derart zu erfassen und in die Pilotöffnung (38) einzugreifen, dass der Faserverbundeinsatzkörper (32) konzentrisch zu der Ausgangsbolzenöffnung (12) zu positionierbar und/oder parallel zu der Ausgangsbolzenöffnung (12) ausrichtbar ist.

14. Bearbeitungsanordnung umfassend ein Applikationswerkzeug (40) nach Anspruch 14, einen Faserverbundeinsatzkörper (32) und ein Faserverbundwerkstück (10) mit einer Bolzenöffnung (12), die eine Klebefläche (34) aufweist, wobei der Stützrahmen (42) das Faserverbundwerkstück (10) erfasst, wobei der Faserverbundeinsatzkörper (32) von dem Führungsbolzen (48) derart erfasst ist, dass der Faserverbundeinsatzkörper (32) teilweise in der Bolzenöffnung (12) und konzentrisch mit der Bolzenöffnung (12) angeordnet ist, wobei der Faserverbundeinsatzkörper (32) von der Andruckeinrichtung (50) auf die Klebefläche (34) gedrückt wird.

## Claims

1. Machining method for changing or repairing a surface location (11) of a workpiece surface (20) of a fibre-composite workpiece (10), wherein the surface location (11) initially does not correspond to a design specification, and corresponds to the design specification after the change, having the steps:
1.1 countersinking the surface location (11) which is an initial bolt opening (12), for creating a contact surface (30) and a depression (33), wherein the contact surface (30) is created by further countersinking of the initial bolt opening (12);
1.2 applying a fibre-composite insert body (32) to the contact surface (30), and fixing the fibre-composite insert body (32) to the fibre-composite workpiece (10) in the depression (33), wherein the fibre-composite insert body (32) has a pilot opening (38) for positioning and orienting the fibre-composite insert body (32) during applying and/or fixing; **characterized in that** the method comprises the following step:
1.3 creating a final bolt opening (62) in the fibre-composite insert body (32) according to the design specification, wherein the final bolt opening (62) is created by enlarging the pilot opening (38).

2. Machining method according to Claim 1, **characterized in that**, in step 1.2, the fibre-composite insert body (32) is positioned concentrically with the depression (33) due to the interaction with the contact surface (30).

3. Method according to either of the preceding claims, **characterized in that** step 1.2 comprises:
- pressing the fibre-composite insert body (32) against the fibre-composite workpiece (10); and/or
- adhesively bonding the fibre-composite insert body (32) to the fibre-composite workpiece (10).

4. Machining method according to one of the preceding claims, **characterized in that**, in step 1.2, the fibre-composite insert body (32) protrudes in the axial direction of the depression (33) beyond the workpiece surface (20), wherein step 1.2 comprises removing the fibre-composite insert body (32) until it is flat and/or flush with the workpiece surface (20).

5. Machining method according to Claim 4, **characterized in that** removing is carried out in such a way that any coatings (60) of the workpiece surface (20) are included, in particular roughened, but not removed.

6. Machining method according to Claim 4 or 5, **characterized in that**, in step 1.2, the removing is carried out by means of grinding.

7. Machining method according to one of the preceding claims, in that, after step 1.2 and, if present, preferably before step 1.3, a functional coating (60), in particular lightning protection materials, are restored.

8. Machining method according to one of the preceding claims, **characterized by** the step:
- providing the fibre-composite insert body (32) by cutting out or by drilling out the fibre-composite insert body (32) from a fibre-composite body (68).

9. Machining method according to one of Claims 1 to 8, **characterized in that**, in step 1.2,
- the fibre-composite insert body (32) is positioned concentrically with the initial bolt opening (12) due to the interaction with the contact surface (30); and/or
- the pilot opening (38) is positioned concentrically with the initial bolt opening (12) and/or is oriented parallel to the initial bolt opening (12) due to the interaction of the fibre-composite insert body (32) with the contact surface (30); and/or
- the fibre-composite insert body (32) protrudes in the axial direction of the initial bolt opening (12) beyond the workpiece surface (20), wherein step 1.2 comprises removing the fibre-composite insert body (32) until it is flush with the workpiece surface (20).

10. Machining method according to one of Claims 1 to 9, **characterized in that**, in step 1.3, creating takes place by means of drilling, in particular reaming.

11. Machining method according to one of Claims 1 to 10, **characterized in that** the initial bolt opening (12) has an initial countersunk depth (18) and the final bolt opening (62) has a final countersunk depth (66), wherein the initial countersunk depth (18) and the final countersunk depth (66) are each defined relative to a workpiece surface (20) of the fibre-composite workpiece (10), wherein the machining method changes, in particular reduces, the initial countersunk depth (18) to the final countersunk depth (66), and comprises a step 1.4 comprising countersinking the final bolt opening (62) to the final countersunk depth (66).

12. Machining method according to Claim 11, **characterized in that**, in step 1.4, the final countersunk depth (66) is selected such that a bolt (14), which is intended for the initial bolt opening (12) and was not flush with the workpiece surface (20) when this bolt (14) was inserted into the initial bolt opening (12), this bolt (14) is now flush with the workpiece surface (20), when this bolt (14) is inserted into the final bolt opening (62).

13. Application tool (40), in particular for use in a machining method according to one of the preceding claims, wherein the application tool (40) is designed for positioning, orienting and pressing a fibre-composite insert body (32) onto an adhesive surface (34) of a bolt opening (12) of a fibre-composite workpiece (10), wherein the application tool (40) comprises a support frame (42) which is designed for the flat support of the application tool (40) on a workpiece surface (20) of the fibre-composite workpiece (10), **characterized in that** the application tool comprises a guide bolt (48), which is designed for positioning and orienting the fibre-composite insert body (32) and which is supported vertically displaceably on the support frame (40), and a pressing device (50), which is designed for applying a pressing force to the fibre-composite insert body (32) in the direction of the fibre-composite workpiece (10), wherein the guide bolt (48) is designed to grasp the fibre-composite insert body (32) and to engage in the pilot opening (38) in such a way that the fibre-composite insert body (32) can be positioned concentrically to the initial bolt opening (12) and/or can be oriented parallel to the initial bolt opening (12).

14. Machining arrangement comprising an application tool (40) according to Claim 14, a fibre-composite insert body (32) and a fibre-composite workpiece (10) having a bolt opening (12) which has an adhesive surface (34), wherein the support frame (42) grasps the fibre-composite workpiece (10), wherein the fibre-composite insert body (32) is grasped by the guide bolt (48) such that the fibre-composite insert body (32) is arranged partially in the bolt opening (12) and concentrically with the bolt opening (12), wherein the fibre-composite insert body (32) is pressed by the pressing device (50) onto the adhesive surface (34).

## Revendications

1. Procédé d'usinage pour modifier ou réparer une zone de surface (11) d'une surface de pièce (20) d'une pièce en composite de fibres (10), la zone de surface (11) ne correspondant initialement pas à une spécification de conception et correspondant à la spécification de conception après la modification, avec les étapes suivantes :
1.1 l'enfoncement de la zone de surface (11), qui est une ouverture de boulon initiale (12), pour créer une surface de contact (30) et un renfoncement (33), la surface de contact (30) étant créée en enfonçant davantage l'ouverture de boulon initiale (12) ;
1.2 la mise en place d'un corps d'insert en composite de fibres (32) sur la surface de contact (30) et la fixation du corps d'insert en composite de fibres (32) sur la pièce en composite de fibres (10) dans le renfoncement (33), le corps d'insert en composite de fibres (32) présentant une ouverture pilote (38) pour positionner et aligner le corps d'insert en composite de fibres (32) lors de la mise en place et/ou de la fixation ; **caractérisé en ce que** le procédé présente l'étape suivante :
1.3 la création d'une ouverture de boulon finale (62) dans le corps d'insert en composite de fibres (32) conformément aux spécifications de conception, l'ouverture de boulon finale (62) étant créée en agrandissant l'ouverture pilote (38).

2. Procédé d'usinage selon la revendication 1, **caractérisé en ce qu'**à l'étape 1.2, le corps d'insert en composite de fibres (32) est positionné de manière concentrique par rapport au renfoncement (33) en raison de l'interaction avec la surface de contact (30).

3. Procédé d'usinage selon l'une quelconque des revendications précédentes, **caractérisé en ce que** l'étape 1.2 comprend
- la pression du corps d'insert en composite de fibres (32) contre la pièce en composite de fibres (10) ; et/ou
- le collage du corps d'insert en composite de fibres (32) avec la pièce en composite de fibres (10).

4. Procédé d'usinage selon l'une quelconque des revendications précédentes, **caractérisé en ce qu'**à l'étape 1.2, le corps d'insert en composite de fibres (32) dépasse de la surface de pièce (20) dans la direction axiale de l'évidement (33), l'étape 1.2 comprenant l'enlèvement du corps d'insert en composite de fibres (32) jusqu'à ce qu'il soit plat et/ou affleurant avec la surface de pièce (20).

5. Procédé d'usinage selon la revendication 4, **caractérisé en ce que** l'enlèvement s'effectue de telle sorte que les éventuels revêtements (60) de la surface de pièce (20) sont pris en compte, notamment rendus rugueux, mais ne sont pas enlevés.

6. Procédé d'usinage selon la revendication 4 ou 5, **caractérisé en ce qu'**à l'étape 1.2, l'enlèvement s'effectue par meulage.

7. Procédé d'usinage selon l'une quelconque des revendications précédentes, en ce qu'après l'étape 1.2 et, le cas échéant, de préférence avant l'étape 1.3, un revêtement fonctionnel (60), notamment des matériaux de protection contre la foudre, est restauré.

8. Procédé d'usinage selon l'une quelconque des revendications précédentes, **caractérisé par** l'étape suivante :
- la fourniture du corps d'insert en composite de fibres (32) par découpage ou par alésage du corps d'insert en composite de fibres (32) à partir d'un corps en composite de fibres (68).

9. Procédé d'usinage selon l'une quelconque des revendications 1 à 8, **caractérisé en ce qu'**à l'étape 1.2
- le corps d'insert en composite de fibres (32) est positionné de manière concentrique par rapport à l'ouverture de boulon initiale (12) en raison de l'interaction avec la surface de contact (30) ; et/ou
- l'ouverture pilote (38) est positionnée de manière concentrique par rapport à l'ouverture de boulon initiale (12) et/ou alignée parallèlement à l'ouverture de boulon initiale (12) en raison de l'interaction du corps d'insert en composite de fibres (32) avec la surface de contact (30) ; et/ou
- le corps d'insert en composite de fibres (32) dépasse de la surface de pièce (20) dans la direction axiale de l'ouverture de boulon initiale (12), l'étape 1.2 comprenant l'enlèvement du corps d'insert en composite de fibres (32) jusqu'à ce qu'il affleure la surface de pièce (20).

10. Procédé d'usinage selon l'une quelconque des revendications 1 à 9, **caractérisé en ce qu'**à l'étape 1.3, la création s'effectue par perçage, notamment par alésage.

11. Procédé d'usinage selon l'une quelconque des revendications 1 à 10, **caractérisé en ce que** l'ouverture de boulon initiale (12) présente une profondeur d'enfoncement initiale (18) et l'ouverture de boulon finale (62) présente une profondeur d'enfoncement finale (66), la profondeur d'enfoncement initiale (18) et la profondeur d'enfoncement finale (66) étant chacune définies par rapport à une surface de pièce (20) de la pièce en composite de fibres (10), le procédé d'usinage modifiant, notamment réduisant, la profondeur d'enfoncement initiale (18) à la profondeur d'enfoncement finale (66), et comprenant une étape 1.4 qui contient un enfoncement de l'ouverture de boulon finale (62) à la profondeur d'enfoncement finale (66).

12. Procédé d'usinage selon la revendication 11, **caractérisé en ce qu'**à l'étape 1.4, la profondeur d'enfoncement finale (66) est choisie de telle sorte qu'un boulon (14) destiné à l'ouverture de boulon initiale (12) qui n'était pas à fleur avec la surface de pièce (20) lorsque ce boulon (14) était inséré dans l'ouverture de boulon initiale (12), ce boulon (14) est désormais à fleur avec la surface de pièce (20) lorsque ce boulon (14) est inséré dans l'ouverture de boulon finale (62).

13. Outil d'application (40), notamment pour utilisation dans un procédé d'usinage selon l'une quelconque des revendications précédentes, l'outil d'application (40) étant réalisé pour positionner, aligner et presser un corps d'insert en composite de fibres (32) contre une surface adhésive (34) d'une ouverture de boulon (12) d'une pièce en composite de fibres (10), l'outil d'application (40) comprenant un cadre de support (42) réalisé pour supporter de manière plane l'outil d'application (40) sur une surface de pièce (20) de la pièce en composite de fibres (10), **caractérisé en ce que** l'outil d'application comprend un boulon de guidage (48) réalisé pour positionner et aligner le corps d'insert en composite de fibres (32) et qui est supporté de manière à pouvoir se déplacer verticalement sur le cadre de support (40), et un dispositif de pression (50) réalisé pour appliquer une force de pression sur le corps d'insert en composite de fibres (32) en direction de la pièce en composite de fibres (10), le boulon de guidage (48) étant réalisé pour saisir le corps d'insert en composite de fibres (32) et s'engager dans l'ouverture pilote (38) de telle sorte que le corps d'insert en composite de fibres (32) puisse être positionné de manière concentrique par rapport à l'ouverture de boulon initiale (12) et/ou puisse être aligné parallèlement à l'ouverture de boulon initiale (12).

14. Agencement d'usinage comprenant un outil d'application (40) selon la revendication 14, un corps d'insert en composite de fibres (32) et une pièce en composite de fibres (10) ayant une ouverture de boulon (12) présentant une surface adhésive (34), le cadre de support (42) saisissant la pièce en composite de fibres (10), le corps d'insert en composite de fibres (32) étant saisi par le boulon de guidage (48) de telle sorte que le corps d'insert en composite de fibres (32) soit agencé partiellement dans l'ouverture de boulon (12) et de manière concentrique par rapport à l'ouverture de boulon (12), le corps d'insert en composite de fibres (32) étant pressé sur la surface adhésive (34) par le dispositif de pression (50).
